# EUROPÄISCHE PATENTSCHRIFT

(11) **EP 1 046 073 B1**
(45) Veröffentlichungstag und Bekanntmachung des Hinweises auf die Patenterteilung: **08.04.2015**
(21) Anmeldenummer: 99907238.2
(22) Anmeldetag: 14.01.1999
(51) Int. Cl.: G02B 21/08, G02B 21/00

(54) **VERFAHREN ZUR ABSTIMMUNG DES BELEUCHTUNGSSTRAHLENGANGS EINES KONFOKALEN MIKROSKOPS AUF DIE EINTRITTSPUPILLE EINES OBJEKTIVS**
METHOD FOR ADJUSTING THE ILLUMINATING BEAM OF A CONFOCAL MICROSCOPE TO THE ENTRANCE PUPIL OF AN OBJECTIVE LENS
MÉTHODE POUR AJUSTER LE FAISCEAU D'ÉCLAIRAGE D'UN MICROSCOPE CONFOCAL À LA PUPILLE D'ENTRÉE D'UN OBJECTIF

(30) Priorität: 14.01.1998 DE 19801833
(43) Veröffentlichungstag der Anmeldung: 25.10.2000
(73) Patentinhaber: Leica Microsystems CMS GmbH, 35578 Wetzlar (DE)
(72) Erfinder: ENGELHARDT, Johann, D-76669 Bad Schönborn (DE); ULRICH, Heinrich, D-69121 Heidelberg (DE)
(74) Vertreter: Patent- und Rechtsanwälte Ullrich & Naumann
(86) Internationale Anmeldenummer: PCT/DE1999/000062
(87) Internationale Veröffentlichungsnummer: WO 1999/036822

(56) Entgegenhaltungen:
- WO-A1-98/28646
- US-A- 3 679 287
- US-A- 3 876 289
- US-A- 4 530 578
- US-A- 4 827 125
- US-A- 5 140 458

## Beschreibung

Die Erfindung betrifft ein Verfahren zur Abstimmung des Beleuchtungsstrahlengangs eines konfokalen Lasermikroskops mit mehreren austauschbaren Objektiven.

Bei der konfokalen Lasermikroskopie gehörte es bislang zum Stand der Technik, dass man im Beleuchtungsstrahlengang den an sich gaußförmigen Laserstrahl über ein geeignetes optisches System derart aufweitet, dass die Eintrittspupille des jeweiligen Objektivs bzw. der dort einsetzbaren Objektive grundsätzlich überleuchtet wird. Das Ausmaß der Überleuchtung ist eine wichtige Designvorgabe. Zum einen dient die Überleuchtung der Eintrittspupille der homogenen Ausleuchtung dieser, wobei die theoretische Auflösung insbesondere auch bei Objektiven mit unterschiedlicher Apertur sicherzustellen ist. Zum anderen führt die Überleuchtung der Eintrittspupille insbesondere bei Objektiven mit kleiner Eintrittspupille zu erheblichen Verlusten des Anregungslichts. Solche Verluste von Anregungslicht sind jedoch bei Anwendungen mit geringen Leistungsreserven im Anregungslicht nicht hinnehmbar.

So ist aus der Praxis beispielsweise das Leica-Laserscanmikroskop TCS bekannt, bei dem eine feste Aufweitungsoptik vorgesehen ist. Der Durchmesser des dort aufgeweiteten Laserstrahls beträgt am Mikroskopobjektiv etwa 25 mm (1/e²-Wert).

Durch Veränderung der Größe des Anregungs-Pinholes lässt sich die Divergenz des Laserlichts und damit die Ausleuchtung der für das Anregungslicht wirksamen Apertur kontrollieren. Hierzu wird lediglich beispielhaft verwiesen auf Brakenhoff G.J. et al., Confocal Microscopy Handbook 1994, Seiten 87-91, ed. J. Pawley. Beispielsweise verfügt ein Objektiv PL APO 40x/1,25 über eine Eintrittspupille von etwa 12 mm Durchmesser. Ein Objektiv PL APO 100x/1,4 hat dagegen eine Eintrittspupille von nur 5 mm Durchmesser. Folglich geht dort das Anregungslicht mit einem Faktor von (12/5)² = 5,76 durch unnötige Überleuchtung verloren.

Auch bei sonst unverändertem Strahlengang vor dem Anregungs-Pinhole ist die Pinhole-Transmission proportional zur Fläche des Pinholes durch entsprechende Lichtverluste bei kleinen Durchmessern gekennzeichnet. Auch dies ist für die Praxis nicht akzeptabel.

WO 98/28646 ist ein älterer, nachveröffentlichter Stand der Technik, der ein Verfahren zur Variation des optisch wirksamen Lochblendendurchmessers zeigt.

Der Erfindung liegt nun die Aufgabe zugrunde, ein Verfahren der eingangs genannten Art anzugeben, wonach eine optimale Ausleuchtung bei Reduzierung von Verlusten des Anregungslichtes gewährleistet ist.

Das erfindungsgemäße Verfahren löst die voranstehende Aufgabe durch die Merkmale des Patentanspruches 1.

Erfindungsgemäß ist erkannt worden, dass man den Beleuchtungsdurchmesser des Beleuchtungsstrahlengangs zur Vermeidung von Lichtverlusten mehr oder weniger exakt auf die Eintrittspupille des jeweiligen Objektivs anpassen sollte. Dazu ist eine im Beleuchtungsstrahlengang angeordnete Beleuchtungsoptik erforderlich, mit Hilfe derer die Veränderung bzw. Anpassung des Beleuchtungsdurchmessers erfolgen kann. Lichtverluste gemäß dem voranstehend erörterten Stand der Technik lassen sich so jedenfalls weitestgehend vermeiden.

Die Beleuchtungsoptik umfasst eine vorzugsweise stufenlos arbeitende Vario-Optik, so dass das Tauschen fester Optiken im Beleuchtungsstrahlengang nicht erforderlich ist. Bei der Vario-Optik kann es sich um eine motorisierte Zoom-Optik handeln, die wiederum als übliche Zoom-Optik ausgeführt sein kann, wie sie beispielsweise in handelüblichen Videokameras verwendet wird.

Zur einfachen und dabei optimalen Anpassung des Beleuchtungsdurchmessers auf die Eintrittspupillen mehrerer Objektive könnte eine automatische Einstellung vorgesehen sein. Im Konkreten könnte die Veränderung des Beleuchtungsdurchmessers auf die Eintrittspupillen vorgegebener, in einem Revolver angeordneter Objektive abgestimmt sein, wobei die Veränderung bzw. Anpassung je nach Einsatz des jeweiligen Objektivs - entsprechend der Position im Revolver - automatisch erfolgt.

Die Beleuchtungsoptik ist einer Lichtleitfaser nachgeordnet.

Bereits zuvor wurde beispielhaft erläutert, dass man im Stand der Technik insbesondere bei kleinen Eintrittspupillen der Objektive Überleuchtungen hingenommen hat. Die dortige Randausleuchtung war dabei sicherlich gut. Zur Begünstigung der Randausleuchtung unter Nutzung des erfindungsgemäßen Verfahrens ist es bei großen Eintrittspupillen des Objektivs von Vorteil, wenn die Beleuchtungsoptik ein die Randausleuchtung beeinflussendes bzw. begünstigendes weiteres optisches Bauteil umfasst, wobei die aus dem Stand der Technik bekannte Überleuchtung auf jeden Fall vermieden sein soll. Ein solches optisches Bauteil könnte als Zusatzlinse, als Ringblende oder als holographisch erzeugtes optisches Element ausgeführt sein, wobei dadurch vor allem der üblicherweise gaußförmige Laserstrahl in den Randbereichen aufgeweitet wird. Beispielsweise könnte dadurch insbesondere im Fall der konfokalen Laserscanning-Mikroskopie eine konstante Intensitätsverteilung über die gesamte Eintrittspupille hinweg realisiert werden, ohne eine wesentliche Überleuchtung der Eintrittspupille des Objektivs zu verursachen. Auch ein davon abweichendes Intensitätsprofil kann für eine spezielle Anwendung vorteilhaft sein.

Schließlich könnte ein Verfahren der voranstehend genannten Art in vorteilhafter Weise bei der Multi-Photonen-Laserscanmikroskopie bzw. zur Multi-Photonen-Anregung verwendet werden.

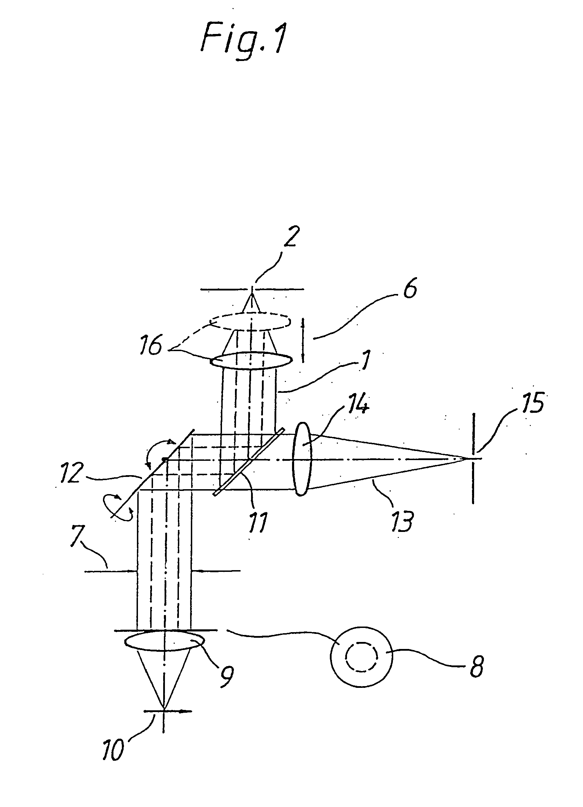

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung dreier Ausführungsbeispiele anhand der Zeichnung zu verweisen. In Verbindung mit der Erläuterung der bevorzugten Ausführungsbeispiele werden auch im Allgemeinen bevorzugte Ausgestaltungen und Weiterbildungen der Lehre erläutert. In der Zeichnung zeigt
- Fig. 1: in einer schematischen Darstellung ein erstes Ausführungsbeispiel einer optischen Anordnung im Strahlengang eines konfokalen Rastermikroskops, wobei als Lichtquelle eine Punktlichtquelle vorgesehen und wobei das Rastermikroskop der Einfachheit halber lediglich schematisch durch dessen Komponenten dargestellt ist;

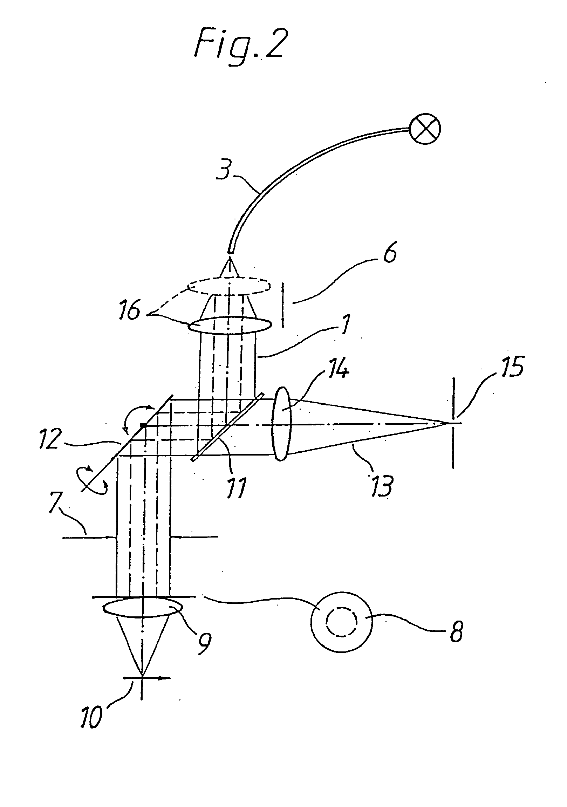

- Fig. 2: in einer schematischen Darstellung ein zweites Ausführungsbeispiel einer optischen Anordnung für das erfindungsgemäße Verfahren im Strahlengang eines konfokalen Rastermikroskops, wobei als Lichtquelle eine Lichtleitfaser vorgesehen und das Rastermikroskop der Einfachheit halber lediglich schematisch durch dessen Komponenten dargestellt ist und

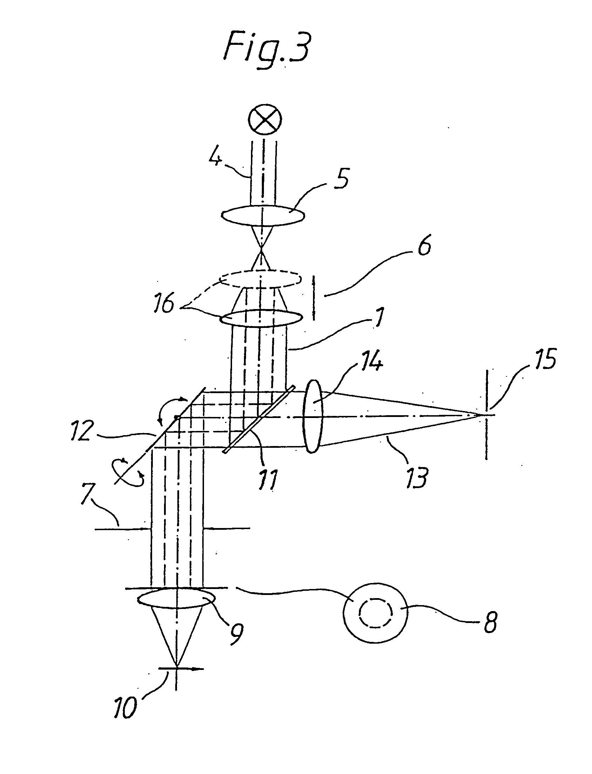

- Fig. 3: in einer schematischen Darstellung ein drittes Ausführungsbeispiel einer optischen Anordnung im Strahlengang eines konfokalen Rastermikroskops, wobei als Lichtquelle eine Laserlichtquelle bzw. ein Laserstrahl und das Rastermikroskop der Einfachheit halber lediglich schematisch durch dessen Komponenten dargestellt ist.

Die Fig. 1 bis 3 zeigen jeweils eine optische Anordnung im Beleuchtungsstrahlengang 1 eines konfokalen Rastermikroskops, wobei der Einfachheit halber das Rastermikroskop insgesamt nur schematisch dargestellt ist.

Während in Fig. 1 als Lichtquelle eine Punktlichtquelle 2 - symbolisch - dargestellt ist, wird in Fig. 2 das Licht über eine Lichtleitfaser 3 eingekoppelt. Bei dem Ausführungsbeispiel in Fig. 3 wird ein Laserstrahl 4 oder ein paralleler Lichtstrahl einer alternativen/konventionellen Lichtquelle über eine Linse 5 unmittelbar in den Beleuchtungsstrahlengang 1 eingekoppelt.

Es ist bei allen drei Ausführungsbeispielen - Fig. 1, 2 und 3 - im Beleuchtungsstrahlengang 1 eine Beleuchtungsoptik 6 angeordnet. Diese Beleuchtungsoptik 6 dient zur Veränderung des Beleuchtungsdurchmessers 7, so dass eine Anpassung des Beleuchtungsdurchmessers 7 auf die symbolisch dargestellte Eintrittspupille 8 des Objektivs 9 möglich ist.

Zum besseren Verständnis zeigen die Fig. nicht nur den Beleuchtungsstrahlengang 1 bis hin zum Objekt 10, sondern vielmehr auch einen im Beleuchtungsstrahlengang 1 angeordneten Strahlvereiniger 11 und einen Scanner 12.

Im Detektionsstrahlengang 13 sind - schematisch dargestellt - eine Pinholeoptik 14 und ein Detektions-Pinhole 15 angeordnet.

Bei den in den Fig. 1 und 2 dargestellten Ausführungsbeispielen ist die Beleuchtungsoptik 6 als stufenlos arbeitende Vario-Optik ausgeführt. Genauer gesagt handelt es sich hier um eine motorisierte Zoom-Optik, die jedoch lediglich symbolisch durch eine verschiebliche Linse 16 gezeigt ist. Im Konkreten handelt es sich hier um eine übliche Zoom-Optik, wie sie aus Videokameras bekannt ist.

Bei der in Fig. 3 dargestellten Ausführungsform ist der Beleuchtungsoptik 6 eine Linse 5 vorgeordnet, in die der Laserstrahl 4 unmittelbar einkoppelt.

Hinsichtlich weiterer, den Fig. nicht entnehmbarer Merkmale wird zur Vermeidung von Wiederholungen auf den allgemeinen Teil der Beschreibung verwiesen.

### Bezugszeichenliste

- 1: Beleuchtungsstrahlengang
- 2: Punktlichtquelle
- 3: Lichtleitfaser
- 4: Laserstrahl
- 5: Linse (dem Laserstrahl nachgeordnet)
- 6: Beleuchtungsoptik
- 7: Beleuchtungsdurchmesser
- 8: Eintrittspupille des Objektivs
- 9: Objektiv
- 10: Objekt
- 11: Strahlenvereiniger
- 12: Scanner
- 13: Detektionsstrahlengang
- 14: Pinholeoptik
- 15: Detektionspinhole
- 16: Linse (der Beleuchtungsoptik)

## Patentansprüche

1. Verfahren zur Abstimmung des Beleuchtungsstrahlengangs (1) eines konfokalen Lasermikroskops mit mehreren austauschbaren Objektiven auf die Eintrittspupille des jeweils im Strahlengang befindlichen Objektivs, wobei durch eine im Beleuchtungstrahlengang (1) angeordnete Beleuchtungsoptik der Beleuchtungsdurchmesser (7) verändert wird und wobei die Beleuchtungsoptik eine einer Lichtleitfaser (3) nachgeordnete, stufenlos arbeitende Vario-Optik umfasst, durch die der Beleuchtungsdurchmesser (7) auf die Eintrittspupille des jeweiligen Objektivs angepasst wird.

2. Verfahren nach Anspruch 1, **dadurch gekennzeichnet, dass** es sich bei der Vario-Optik um eine motorisierte Zoomoptik handelt.

3. Verfahren nach Anspruch 1 oder 2, **dadurch gekennzeichnet, dass** die Veränderung des Beleuchtungsdurchmessers (7) auf die Eintrittspupillen (8) der in einem Revolver angeordneten Objektive (9) abgestimmt ist und automatisch erfolgt.

4. Verfahren nach einem der Ansprüche 1 bis 3, **dadurch gekennzeichnet, dass** die Beleuchtungsoptik (6) ein die Randausleuchtung insbesondere bei großen Eintrittspupillen (8) des Objektivs (9) beeinflussendes bzw. begünstigendes weiteres optisches Bauteil umfasst.

5. Verfahren nach Anspruch 4, **dadurch gekennzeichnet, dass** das weitere optische Bauteil als Zusatzlinse ausgeführt ist.

6. Verfahren nach Anspruch 4, **dadurch gekennzeichnet, dass** das weitere optische Bauteil als Ringblende ausgeführt ist.

7. Verfahren nach Anspruch 4, **dadurch gekennzeichnet, dass** das weitere optische Bauteil als holographisch erzeugtes optisches Element ausgeführt ist.

8. Verfahren nach einem der Ansprüche 1 bis 7 bei der Mehr-Photonen-Laserscanmikroskopie.

## Claims

1. Method for adapting the illumination beam path (1) of a confocal laser microscope with a plurality of exchangeable objectives to the entry pupil of the respective objective being in the beam path, wherein the illumination diameter (7) is modified with an illumination optics being arranged in the illumination beam path (1) and the illumination optics comprises a steplessly variable optics being arranged downstream from an optical fiber (3), the illumination diameter (7) is matched to the entry pupil of the respective objective by the variable optics.

2. Method of claim 1, **characterized in that** the variable optics is a motorized zoom optics.

3. Method of claim 1 or 2, **characterized in that** the modification of the illumination diameter (7) is adapted to the entry pupils (8) of the objectives (9) being arranged in a revolver and being accomplished automatically.

4. Method of one of the claims 1 to 3, **characterized in that** the illumination optics (6) comprises a further optical component that influences or favors the edge illumination in particular with large entry pupils (8) for the objective (9).

5. Method of Claim 4, **characterized in that** the further optical component is embodied as an additional lens.

6. Method of Claim 4, **characterized in that** the further optical component is embodied as an annular stop.

7. Method of Claim 4, **characterized in that** the further optical component is embodied as a holographically generated optical element.

8. Method of one of the Claims 1 through 7 in multiphoton laser scanning microscopy.

## Revendications

1. Procédé pour ajuster le faisceau d'éclairage (1) d'un microscope laser confocal comprenant plusieurs objectifs remplaçables à la pupille d'entrée de l'objectif se trouvant respectivement dans le faisceau, le diamètre d'éclairage (7) étant modifié par une optique d'éclairage disposée dans le faisceau d'éclairage (1) et l'optique d'éclairage comprenant une optique variable fonctionnant en continu, disposée après une fibre optique (3), qui permet d'adapter le diamètre d'éclairage (7) à la pupille d'entrée de l'objectif respectif.

2. Procédé selon la revendication 1, **caractérisé en ce que** l'optique variable est une optique de zoom motorisée.

3. Procédé selon la revendication 1 ou 2, **caractérisé en ce que** la variation du diamètre d'éclairage (7) est ajustée aux pupilles d'entrée (8) des objectifs (9) disposés dans une tourelle et s'effectue automatiquement.

4. Procédé selon l'une quelconque des revendications 1 à 3, **caractérisé en ce que** l'optique d'éclairage (6) comprend un composant optique supplémentaire influençant ou favorisant l'éclairage au bord, en particulier dans le cas de grandes pupilles d'entrée (8) de l'objectif (9).

5. Procédé selon la revendication 4, **caractérisé en ce que** le composant optique supplémentaire est réalisé sous forme de lentille supplémentaire.

6. Procédé selon la revendication 4, **caractérisé en ce que** le composant optique supplémentaire est réalisé sous forme de diaphragme annulaire.

7. Procédé selon la revendication 4, **caractérisé en ce que** le composant optique supplémentaire est réalisé sous forme d'élément optique généré de manière holographique.

8. Procédé selon l'une quelconque des revendications 1 à 7, dans la microscopie à balayage laser à plusieurs photons.
